(19) Europäisches Patentamt
European Patent Office
Office européen des brevets

(11) **EP 3 708 684 B1**

(12) **EUROPÄISCHE PATENTSCHRIFT**

(45) Veröffentlichungstag und Bekanntmachung des Hinweises auf die Patenterteilung:
**02.03.2022  Patentblatt 2022/09**

(21) Anmeldenummer: **19163059.9**

(22) Anmeldetag: **15.03.2019**

(51) Internationale Patentklassifikation (IPC):
**C21B 13/00** (2006.01)  **F27B 15/08** (2006.01)
**F27B 15/09** (2006.01)  **F27B 15/10** (2006.01)

(52) Gemeinsame Patentklassifikation (CPC):
**C21B 13/0033; C21B 13/0073; F27B 15/08; F27B 15/09; F27B 15/10;** Y02P 10/134; Y02P 10/20

(54) **VERFAHREN ZUR DIREKTREDUKTION IN EINEM FLIESSBETT**

METHOD FOR DIRECT REDUCTION IN A FLUIDISED BED

PROCÉDÉ DE RÉDUCTION DIRECTE DANS UN LIT FLUIDISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.09.2020  Patentblatt 2020/38**

(73) Patentinhaber: **Primetals Technologies Austria GmbH**
**4031 Linz (AT)**

(72) Erfinder:
• **Hiebl, Bernhard**
**4073 Wilhering (AT)**
• **Rein, Norbert**
**1060 Wien (AT)**
• **Wurm, Johann**
**4283 Bad Zell (AT)**
• **Ofner, Hanspeter**
**4055 Pucking (AT)**
• **Eisl, Roland**
**4844 Regau (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
DE-A1- 2 420 640      US-A- 3 140 940
US-A- 3 776 533

**Beschreibung**

Gebiet der Technik

Die Anmeldung betrifft ein Verfahren zur Direktreduktion von oxidischen Eisenträgerpartikeln zu einem Reduktionsprodukt in einem im Kreuzstrom von einem 30 - 100 Mol% Wasserstoff $H_2$ enthaltenden Reduktionsgas durchströmten Fließbett.

Stand der Technik

Verschiedenste Verfahren zur Direktreduktion von oxidischen Eisenträgerpartikeln, beispielsweise Eisenerz, mittels einer von Reduktionsgas durchströmten Wirbelschichtauch Wirbelbett genannt - sind bekannt, wie in beispielsweise US3776 533A. Kommerziell angewendet wurden bisher beispielsweise FIOR, FINMET, FINEX, CIRCORED.

Im Rahmen dieser Anmeldung umfasst der Begriff Eisenerz sowohl Erze, die nach Förderung aus einer Mine direkt dem Reduktionsprozess zugeführt werden, als auch Erze, die erst nach auf die Förderung folgenden Aufbereitungsschritten oder anderen Vorbehandlungen dem Reduktionsprozess zugeführt werden. Jedenfalls ist in ihnen oxidiertes Eisen enthalten.

In den zur Eisenerzreduktion verwendeten Wirbelschichtverfahren werden Feststoffteilchenalso die oxidischen Eisenträgerpartikel, beispielsweise Schüttgut aus Eisenerz - von Reduktionsgas entgegen der Schwerkraft durchströmt. Dadurch werden die Feststoffteilchen in einen fluidisierten Zustand, d.h. in Schwebe versetzt, und die durchströmte Menge nimmt praktisch die Fließeigenschaft eines Fluids an, was auch fluidisieren genannt wird. Fluidisierung wird auch zum Transport von Feststoffen genutzt, beispielsweise bei Luftförderrinnen mit Bewegung von Feststoff und Gas im Kreuzstrom.

Die Ausprägung einer Wirbelschicht kann je nach Stärke der Fluidisierung in verschiedene Stufen eingeteilt werden, beispielsweise minimum/smooth/bubbling/turbulent. Ausgehend von einem Festbett beziehungsweise fixed bed genannten Zustand, in dem das Reduktionsgas das Schüttgut durchströmt, ohne es zu fluidisieren. Mit ansteigender Gasgeschwindigkeit beginnt Fluidisierung mit dem Zustand minimum fluidization und geht dann mit weiter ansteigender Gasgeschwindigkeit in den Zustand smooth fluidization über. Die in einer Wirbelschicht vorliegende Stufe der Fluidisierung hängt von Gasgeschwindigkeit, Gasdichte und -viskosität sowie von der Partikelmasse und -dichte, der Form, dem Partikelvolumen und der Korngrößenverteilung der eingesetzten Feststoffpartikel ab. Gleichzusetzen mit dem Begriff Wirbelschicht ist der Begriff Fließbett, die beiden Begriffe werden in der vorliegenden Anmeldung gleichbedeutend verwendet. Am Wirbelpunkt erfolgt Übergang von einem Festbett zu einem Fließbett.

Grundsätzlich werden in einer Wirbelschicht aufgrund der großen zur Verfügung stehenden Austauschfläche zwischen Feststoff und Gas vergleichsweise große Stoff - und Wärmeübertragungsraten erzielt. Entsprechend kommt es bei den Reduktionsreaktionen zu hohen spezifischen Umsatzraten.

Der technisch und ökonomisch erreichbare Metallisierungsgrad der Reduktionsprodukte hängt von vielen Faktoren ab.

Zur Reduktion einer Stoffmenge Eisenoxid zu metallischem Eisen muss zumindest die für die Reduktionsreaktion stöchiometrisch benötigte Menge an Reduktionsgas bereitgestellt werden. Das tatsächlich durch den Feststoff zu transportierende Reduktionsgasvolumen wird durch die thermodynamische Gleichgewichtslage zwischen den verschiedenen Oxidationsstufen des Erzes und dem Reduktionsgas bestimmt. Diese Gleichgewichtslage kann durch die Temperatur beeinflusst werden.

Mit einer Betriebsweise unter erhöhtem Druck kann der Massestrom des Reduktionsgases erhöht werden, nachteilig sind dabei jedoch höhere Anforderungen an das Design und die Sicherheitstechnik des Reduktionsaggregates.

Bei hohen Temperaturen ergibt sich auch der Nachteil der Neigung der Feststoffteilchen zur Agglomeration - auch Sticking genannt -, was den Betrieb der Wirbelschicht ungünstig beeinflusst, beispielsweise durch Defluidisierung.

Mit einer Betriebsweise mit erhöhter Gasgeschwindigkeit kann der Massestrom des Reduktionsgases erhöht werden.

Im Rahmen der vorliegenden Anmeldung ist mit dem Begriff Gasgeschwindigkeit die Leerrohrgeschwindigkeit gemeint.

Die bei einem bestimmten Schüttgut aus Feststoffteilchen maximale praktisch anwendbare Gasgeschwindigkeit - und damit die maximal pro Flächeneinheit pro Zeiteinheit durch die Wirbelschicht transportierbare Gasmenge - ergibt sich aus jener Gasgeschwindigkeit, über der ein für den Prozess nicht mehr vernachlässigbarer Anteil der Feststoffteilchen aus der Wirbelschicht ausgetragen wird.

Der Zustand, wenn die Gasgeschwindigkeit der Absetzgeschwindigkeit der Feststoffteilchen entspricht, wird Austragspunkt genannt. Die Gasgeschwindigkeit des Reduktionsgases gleicht im Austragspunkt der Absetzgeschwindigkeit der Feststoffteilchen und wird als Schwebegeschwindigkeit bezeichnet. Bei weiterer Steigerung der Gasgeschwindigkeit werden die Feststoffteilchen vom Gas mitgerissen und entgegen der Schwerkraft aus der Wirbelschicht ausgetragen. Aus der Wirbelschicht ausgetragene Feststoffteilchen nehmen nicht mehr an den Reaktionen in der Wirbelschicht teil, wodurch sich die Effizienz eines wirbelschichtbasierten Reduktionsverfahrens vermindert.

Je geringer die Korngröße von Feststoffteilchen ist, desto geringer ist die Schwebegeschwindigkeit. Aus geringen Gasgeschwindigkeiten ergibt sich eine Notwendigkeit von großen Reaktorflächen zur Gewährleistung eines bestimmten Durchsatzes für geringe Korngrößen. Vergrößerung von Reaktorflächen hat jedoch Nachteile wie hohen Bauaufwand, hohe Betriebskosten, höhere Fehleranfälligkeit. Großen Reaktorflächen wirkt man bei gegenwärtig angewendeten Technologien durch beispielsweise bezüglich Sicherheitstechnik und Betrieb aufwändige Maßnahmen entgegen - beispielsweise signifikante Druckerhöhung, Betrieb mit einer turbulenten Wirbelschicht einschließlich Rückführung von ausgetragenem Feststoff.

Bei Verarbeitung von oxidischen Eisenträgerpartikeln mit großen Anteilen kleiner Korngrößen ergeben sich daher die Probleme geringer einsetzbarer Gasgeschwindigkeiten und damit verbunden der Notwendigkeit großer Reaktorflächen.

Als Maßnahme zur Erhöhung der Austragsgeschwindigkeit werden kleine Feststoffteilchen auch oft agglomeriert, bevor sie einer Reduktion in der Wirbelschicht zugeführt werden.

Zusammenfassung der Erfindung

Technische Aufgabe

Es ist die Aufgabe der vorliegenden Erfindung, Verfahren und Vorrichtungen bereitzustellen, die bei vergleichsweise geringen sicherheitstechnischen Anforderungen und geringem Bau- und Betriebs- Aufwand eine Nutzung von oxidischen Eisenträgerpartikeln mit zumindest 90 Massen% mit einer Korngröße kleiner/gleich 200 Mikrometer für Direktreduktion in einem Fließbett ohne vorherigem Agglomerationsschritt zulassen.

Technische Lösung

Diese Aufgabe wird gelöst durch ein

Verfahren zur Direktreduktion von oxidischen Eisenträgerpartikeln zu einem Reduktionsprodukt in einem im Kreuzstrom von einem 30 - 100 Mol% Wasserstoff $H_2$ enthaltenden Reduktionsgas durchströmten Fließbett,
dadurch gekennzeichnet, dass
die in das Fließbett eingegebenen oxidischen Eisenträgerpartikel zu zumindest 90 Massen% eine Korngröße kleiner/gleich 200 Mikrometer haben,
und dass die Leerrohrgeschwindigkeit U des durch das Fließbett strömenden Reduktionsgases zwischen 0,05 m/s und 1 m/s so eingestellt wird, dass sie für die Korngröße d gleich $d_{30}$ der in das Fließbett eingegebenen oxidischen Eisenträgerpartikel oberhalb der theoretischen Schwebegeschwindigkeit $U_t$ liegt und kleiner/gleich $U_{max}$ ist.

Der Wert $d_{30}$ für die Korngröße - in dieser Anmeldung auch Partikelgröße genannt - der eingegebenen oxidischen Eisenträgerpartikel gibt an, dass 30 Massen% der oxidischen Eisenträgerpartikel eine Partikelgröße kleiner/gleich $d_{30}$ haben - 70 Massen% also größer sind.

Der theoretisch vorhergesagte Wert $U_t$ für eine Korngröße d ergibt sich aus:

$$U_t = \sqrt{\left(\frac{4}{3} * \frac{(\rho p - \rho g)}{\rho g} * \frac{d*g}{Cw}\right)}$$

$$\text{mit } \quad C_W = \frac{24}{Re} + \frac{4}{\sqrt{Re}} + 0,4 \quad \text{und mit} \quad Re = \frac{\rho g * U_t * d}{\mu}$$

$U_{max}$ ergibt sich aus dem tatsächlich gefundenen Zusammenhang zwischen Partikelgröße und Schwebegeschwindigkeit für eine Partikelgröße d gleich $d_{30}$:

$$U_{max} = (40000*d)\textasciicircum 2,78$$

$U_t$      theoretische Schwebegeschwindigkeit [m/s]

$U_{max}$     maximale Leerrohrgeschwindigkeit für d=$d_{30}$ [m/s]

$\rho p$     Partikeldichte [kg/m$^3$]

$\rho g$     Dichte des Reduktionsgases [kg/m$^3$]; für den Betriebszustand

d     Korngröße [m]

g     Erdbeschleunigung [m/s$^2$]

$\mu$     dynamische Viskosität [kg/(m*s)]

$c_w$     Widerstandsbeiwert

Re     Reynoldszahl

Die Theorie der herrschenden Lehre würde gemäß dem bereits genannten Zusammenhang für $U_t$ erwarten lassen, dass bei Einstellung der Leerrohrgeschwindigkeit U oberhalb der theoretischen, für die Partikelgröße $d_{30}$ der in das Fließbett eingegebenen oxidischen Eisenträgerpartikel geltenden, Schwebegeschwindigkeit $U_t$ mehr als 30 Massen% ausgetragen werden.

Überraschenderweise hat sich für in das Fließbett eingegebene oxidische Eisenträgerpartikel mit einer Korngröße von zumindest 90 Massen% kleiner/gleich 200 Mikrometer herausgestellt, dass bei erfindungsgemäßer Verfahrensführung weniger ausgetragen wird, obwohl die $U_t$ für die Partikelgröße d gleich $d_{30}$ überschritten wird, solange die Leerrohrgeschwindigkeit U kleiner/gleich $U_{max}$ für d gleich $d_{30}$ ist. Entsprechend kann bei einem gegebenen maximal akzeptablen Austrag mit höheren Gasgeschwindigkeiten als aus der Theorie erwartet gearbeitet werden. Bevorzugt wird die Leerrohrgeschwindigkeit U so eingestellt, dass maximal 30 Massen% ausgetragen werden - also $U_{max}$ für d=$d_{30}$ -, besonders bevorzugt so, dass maximal 25 Massen% ausgetragen werden, ganz besonders bevorzugt so, dass maximal 20 Massen% ausgetragen werden, und äußerst bevorzugt so, dass maximal 15 Massen% ausgetragen werden.

Das Reduktionsgas wird erfindungsgemäß mit einer Geschwindigkeit von über 0,05 m/s, bevorzugt über 0,1 m/s, durch die Wirbelschicht geführt. Mit den erfindungsgemäß gewählten Parametern zeigen die oxidischen Eisenträgerpartikel in dem gebildeten Fließbett, das vom Reduktionsgas im Kreuzstrom durchströmt wird, ein anderes Verhalten, als nach herrschender Lehre - gemäß dem bereits genannten Zusammenhang für $U_t$ - vorausgesagt wird. Unterhalb einer Geschwindigkeit von 0,05 m/s ist die Aufrechterhaltung des Fließbetts schwierig zu regeln und das Verhältnis von Aufwand der Verfahrensführung zum erzielbaren Durchsatz gering. Wie weit die tatsächlich gewählte Geschwindigkeit über 0,05 m/s, bevorzugt über 0,1 m/s, liegt, hängt vom für den Betreiber zulässigen Ausmaß des Austrags aus dem Fließbett ab. Einerseits ist eine höhere Geschwindigkeit erwünscht, weil infolgedessen die für einen gewünschten Durchsatz notwendige Reaktorfläche kleiner sein kann. Andererseits nimmt der Austrag mit steigender Geschwindigkeit zu, und vermindert der Austrag von Partikeln aus der Wirbelschicht den realisierbaren Durchsatz. Daher beträgt die Obergrenze der Leerrohrgeschwindigkeit 1 m/s.

Besonders bevorzugt ist die Durchführung des Verfahrens in einem Geschwindigkeitsbereich von 0,05 m/s bis 0,5 m/s, weil Durchsatz und das Ausmaß von Austrag dann in einem günstigen Verhältnis stehen.

Erfindungsgemäß wird ein Fließbett in einem Zustand der Fluidisierung im Bereich Minimum verwendet; es wird keine zirkulierende Wirbelschicht verwendet.

Die ausgetragene Menge bezieht sich auf den Zeitraum von Eingabe oxidischer Eisenträgerpartikel in das Fließbett bis zur Entnahme des aus ihnen gebildeten Reaktionsproduktes - also auf die Partikelverweilzeit im Fließbett.

Bezüglich allgemeiner Sachverhalte zur Reduktion in einer Wirbelschicht beziehungsweise einem Fließbett wird auf den einleitenden Text zum Stand der Technik verwiesen. "Einer" ist als unbestimmter Artikel zu verstehen im Ausdruck "in einem Fließbett".

Die oxidischen Eisenträgerpartikel können Eisenerz sein oder auch anderes entsprechend feinkörniges, Eisenoxide enthaltendes Material, beispielsweise Gichtstaub, Sinterstaub, Pelletierstaub oder andere Rücklaufstoffe eines Eisen- beziehungsweise Stahlwerks; es können auch Mischungen daraus sein. Unter dem Begriff Eisenerz sind erfindungsgemäß zu verstehen sowohl Erze, die direkt nach der Förderung aus einer Mine dem Reduktionsprozess zugeführt werden, als auch Erze, die erst nach auf die Förderung folgenden Aufbereitungsschritten - beispielsweise Flotation - oder anderen Vorbehandlungen dem Reduktionsprozess zugeführt werden. Jedenfalls ist in ihnen oxidiertes Eisen enthalten.

Korngrößenbereich und Korngrößenverteilung ergeben sich durch den Vorgang der großindustriellen Produktion des Einsatzmaterials. Sie werden per Siebanalyse gemessen . Ein Material von oxidischen Eisenträgerpartikeln, das zu zumindest 90 Massen% eine Korngröße kleiner/gleich 200 Mikrometer hat - und in der Regel mit mehr als 50 Massen% kleiner 50 Mikrometer $\mu$m vorliegt -, ist beispielsweise Pelletfeed. Zur Anwendung kommt ein Analyseverfahren nach ISO13320 im Status März 2019.

Das Reduktionsgas kann aus Wasserstoff $H_2$ bestehen oder eine Mischung von Wasserstoff mit einem oder mehreren weiteren Gasen sein. Beispielsweise kann technisch reiner Wasserstoff verwendet werden. Reduktionsmittel ist also zumindest Wasserstoff $H_2$. Die weiteren Gase können selber auch reduzierend auf oxidischen Eisenträgerpartikel wirken, also zusätzlich zu Wasserstoff $H_2$ weitere Reduktionsmittel bereitstellen. Ein weiteres Gas kann beispielsweise Kohlenmonoxid CO sein. Der Wasserstoff kann beispielsweise aus Elektrolyse, bevorzugt mittels grüner Energie, stammen, oder aus Reformierung von Erdgas.

Die Reduktionskinetik von Wasserstoff $H_2$ mit Eisenoxiden ist grundsätzlich, und besonders bei tieferen Temperaturen, günstiger als bei anderen Gasen, beispielsweise im Vergleich zu Kohlenmonoxid CO. Daher soll das Reduktionsgas erfindungsgemäß zumindest 30 Mol% Wasserstoff $H_2$ enthalten, um bei dem infolge der Sticking-Gefahr bevorzugten erfindungsgemäßen Temperaturbereich noch ökonomisch brauchbare Reduktionskinetik zu gewährleisten. Im Vergleich zu einem Reduktionsgas mit geringerem Wasserstoff-Gehalt ist infolgedessen zur Erzielung eines bestimmten Metallisierungsgrades weniger frisches Reduktionsgas einzusetzen. Im Vergleich zu einem Reduktionsgas mit geringerem Wasserstoff-Gehalt ist infolgedessen gegebenenfalls weniger aus dem Fließbett austretendes, verbrauchte Reduktionsgas nach Aufbereitung zwecks Nutzung des in ihm enthaltenen unverbrauchten Reduktionsmittels zu rezirkulieren.

Das Reduktionsgas wird von unten nach oben, entgegen der Schwerkraft, durch das Fließbett geführt. Erfindungsgemäß wird das Verfahren im Kreuzstrom durchgeführt. Die Bewegung der Partikel - oxidische Eisenträgerpartikel, Zwischenprodukt, Reduktionsprodukt - im Fließbett erfolgt so, dass ein Kreuzstrom des Reduktionsgases und der Partikel resultiert. Bei dem Verfahren werden die oxidischen Eisenträgerpartikel in das Fließbett eingegeben und es wird das Reduktionsprodukt aus dem Fließbett entnommen. Die Bewegung vom Eingabeort zum Entnahmeort im Kreuzstrom zum entgegen der Schwerkraft strömenden Reduktionsgas erfolgt im Wesentlichen in der Horizontalen.

Bei einem Fließbett im Kreuzstrom - ausgeführt beispielsweise in einer Fließbettrinne - erfolgt die Direktreduktion über die - vorzugsweise annähernd horizontal ausgerichteteLänge des Fließbetts von einem Eingabeort zu einem Entnahmeort. Somit ändert sich über die Länge des Fließbetts die Qualität - beispielsweise die Mengenverhältnisse der Eisenoxidarten Magnetit, Hämatit oder Wüstit, oder die Porosität der Partikel - des enthaltenen Eisenoxides. Eine Rückvermischung, wie sie bei einer Wirbelschicht sogar bis zu Homogenität an allen Orten vorkommen kann, ist unerwünscht, weil dadurch beispielsweise wenig reduziertes Material vom Eingabeort zum Entnahmeort gelangen könnte beziehungsweise die Partikelverweilzeit ungleichmäßig werden würde.

Das Reduktionsprodukt - beispielsweise Eisenschwamm DRI mit einem Metallisierungsgrad über 90 % - weist einen höheren Metallisierungsgrad auf als die oxidischen Eisenträgerpartikel. Der Metallisierungsgrad ist definiert als das Verhältnis der Massenanteile von metallisch vorliegendem Eisen zum gesamten vorhandenen Eisen im Reduktionsprodukt:

$$\text{Metallisierungsgrad} = \text{Massenanteil (Fe metallisch)} / \text{Massenanteil (Fe gesamt)}$$

Je nach Verfahrensführung kann der Metallisierungsgrad des Reduktionsprodukts verschieden sein. Je nach Einsatzzweck des Reduktionsproduktes kann ein höherer oder niedrigerer Metallisierungsgrad gewünscht sein - beispielsweise kann er bei Nutzung des erfindungsgemäßen Verfahrens zur Vorreduktion für anderweitige Endreduktion auch unter dem von Eisenschwamm DRI liegen, beispielsweise in der Größenordnung von 60 %.

Wie lange Partikel bis zur Umsetzung zum gewünschten Reduktionsprodukt in dem Fließbett verbleiben müssen - genannt Partikelverweilzeit -, hängt von der Kinetik der abzulaufenden Reduktionsreaktion ab. Diese ist wiederum abhängig von einer Vielzahl von Faktoren wie der Zusammensetzung des Reduktionsgases, der Geschwindigkeit des Reduktionsgases, der Art der oxidischen Eisenträgerpartikel - beispielsweise je nachdem, ob Magnetit, Hämatit oder Wüstit zu reduzieren ist - , der Porosität der zu reduzierenden Partikel.

Die Partikelverweilzeit entspricht der Zeit, die Partikel für das Strömen vom Eingabeort zum Entnahmeort brauchen - eingegeben als oxidische Eisenträgerpartikel, entnommen als Reduktionsprodukt-Partikel. Wie lange die Partikelverweilzeit ist, hängt beispielsweise vom Abstand des Eingabeortes vom Entnahmeort und von der Betthöhe des Fließbetts ab.

Bei der erfindungsgemäßen Verfahrensführung im Kreuzstrom, die beispielsweise in einem im Wesentlichen horizontalen Fließbett unter - bevorzugt kontinuierlicher - Zugabe von oxidischen Eisenträgerpartikel und - bevorzugt kontinuierlicher - Entnahme des Reduktionsproduktes erfolgt, lässt sich die Partikelverweilzeit über die eingestellte Betthöhe einfach regulieren, beispielsweise über Wehre. Die Partikelverweilzeit lässt sich dabei auch über die Wahl des Abstandes zwischen Eingabeort und Entnahmeort regulieren.

Unter im Wesentlichen horizontal wird eine Abweichung von der Horizontalen von bis zu 10° mit umfasst; bevorzugt sind bis zu 5° Abweichung mit umfasst, besonders bevorzugt sind bis zu 2° Abweichung mit umfasst. Bei zu hoher Abweichung von der Horizontalen wird die Betthöhe im Fließbett über die Längserstreckung des Fließbetts vom Eingabeort zum Entnahmeort inhomogen, was sich negativ auf die Regelbarkeit der Partikelverweilzeit auswirkt.

Für die Dauer der Gasverweilzeit verbleibt das Reduktionsgas im Fließbett. Ist die Gasverweilzeit zu kurz für die Einstellung annähernd eines Gleichgewichtes der Reduktionsreaktion, wird relativ viel unverbrauchtes Reduktionsmittel das Fließbett verlassen. Der Anteil von unverbrauchtem Reduktionsmittel in dem das Fließbett verlassenden Gasverbrauchtes Reduktionsgas genannt - kann über die Betthöhe beeinflusst werden. Verfahrensführung im Kreuzstrom macht es einfach, die Anforderungen von Partikelverweilzeit und Gasverweilzeit abzustimmen.

Vorteilhafte Wirkungen der Erfindung

Mit dem erfindungsgemäßen Verfahren ist es möglich, erfindungsgemäß vorliegende Eisenträger-Partikel ohne vorherige Agglomeration ökonomisch sinnvoll zu reduzieren. Im Vergleich zu bekannten Verfahren kann auch der Bau- und Betriebsaufwand für Anlagen zur Durchführung des Verfahrens geringer gehalten werden, da zumindest die Temperatur, gegebenenfalls auch der Druck relativ gering ist. Daraus ergibt sich auch, dass sicherheitstechnisch weniger Aufwand getrieben werden muss.

Druckerhöhung wirkt sich über gesteigerten Massestrom des Reduktionsgases als mögliche Durchsatzerhöhung bei gleichbleibender Reaktorfläche beziehungsweise mögliche Verminderung von Reaktorfläche bei gleichbleibendem Durchsatz aus.

Allerdings kann geplanter Überdruck höhere Anforderungen an das Design und die Sicherheitstechnik des Reduktionsaggregates stellen.

Das erfindungsgemäße Verfahren wird bevorzugt bei einer Temperatur durchgeführt, die zwischen den Grenzen 773 K und 1173 K liegt, wobei diese Grenzen mit eingeschlossen sind. Damit wird die Gefahr von Sticking der Partikel in dem Fließbett in unerwünschtem Ausmaß, was bei höheren Temperaturen Probleme bereiten würde, reduziert. Unterhalb 773 K verläuft die Reduktion aus thermodynamischen und kinetischen Gründen nicht in einem für wirtschaftliche Verfahrensführung befriedigenden Ausmaß.

Beispielsweise werden die oxidischen Eisenträgerpartikel vorgewärmt und mit einer Temperatur von bis zu 1173 K in das Fließbett eingebracht, und das Reduktionsgas mit einer Temperatur bis zu 1023 K in das Fließbett eingeleitet. Die Reduktion mit Wasserstoff $H_2$ verläuft endotherm, so dass das Reduktionsprodukt mit einer tieferen Temperatur, beispielsweise von etwa 853 K, erhalten wird.

Statt oder zusätzlich zu Vorwärmung außerhalb des Fließbetts könnte auch das Verhältnis von exotherm reagierenden reduzierenden Komponenten - wie beispielsweise Kohlenmonoxid CO - zu endotherm reagierenden reduzierenden Komponenten - wie beispielsweise Wasserstoff $H_2$ - im Reduktionsgas so eingestellt werden, dass im Fließbett in situ Wärme in gewünschtem Ausmaß zugeführt wird.

Vorzugsweise wird das erfindungsgemäße Verfahren unter einem geringen Überdruck gegenüber der Umgebung durchgeführt. Bei einem geringen Überdruck ist einerseits noch kein apparatebaulicher sicherheitstechnischer Zusatzaufwand im Vergleich zu überdruckloser Verfahrensführung notwendig, und andererseits werden Gefahren durch Eindringen von Umgebungsluft in die Reaktoren vermindert. Der Überdruck beträgt vorzugsweise bis zu 200000 Pascal, wobei dieser Wert mit umfasst ist.

Nach einer vorteilhaften Variante ist $d_{30}$ kleiner/gleich 110 Mikrometer für die in das Fließbett eingegebenen oxidischen Eisenträgerpartikel. In diesem Bereich lässt sich das Fließbett besonders gut betreiben, da der Austrag von feinen oxidischen Eisenträgerpartikeln nicht ungünstig hoch ist und die Fluidisierung des Fließbetts nicht durch große Partikelgrößen erschwert wird.

Nach einer vorteilhaften Variante wird das erfindungsgemäße Verfahren so durchgeführt, dass die in das Fließbett eingegebenen oxidischen Eisenträgerpartikel zu zumindest 50 Massen% zwischen 15 Mikrometer und 100 Mikrometer liegen - wobei die Grenzen mit umfasst sind.

In diesem Bereich lässt sich das Fließbett besonders gut betreiben, da der Austrag von feinen oxidischen Eisenträgerpartikeln nicht ungünstig hoch ist und die Fluidisierung des Fließbetts nicht durch große Partikelgrößen erschwert wird.

Nach einer weiteren vorteilhaften Variante wird das erfindungsgemäße Verfahren so durchgeführt, dass die in das Fließbett eingegebenen oxidischen Eisenträgerpartikel zu zumindest 50 Massen% eine Korngröße größer/gleich 15 Mikrometer haben. In diesem Bereich lässt sich das Fließbett besonders gut betreiben, da der Austrag von feinen oxidischen Eisenträgerpartikeln nicht ungünstig hoch ist.

Je feiner die oxidischen Eisenträgerpartikel sind, desto größer wird der aufgrund eines erhöhten Staubaustrags notwendige Aufwand für Entstaubung von verbrauchtem Reduktionsgas. Weiterhin kann das Fließbett selber weniger stabil und schwerer kontrollierbar werden mit abnehmender Größe der Eisenträger-Partikel. Vorzugsweise liegen die oxidischen Eisenträgerpartikel mit Anteilen von maximal 30 Massen% kleiner als 10 Mikrometer $\mu$m vor. Zumindest bis zu dieser Feinheit der oxidischen Eisenträgerpartikel kann das Verfahren gut beherrscht werden.

Das Fließbett kann auch verschiedene Zonen mit verschiedenen Betthöhen aufweisen. In der Regel erfolgt bei oxidischen Eisenträgerpartikeln aufgrund des Vorliegens von Eisen in verschiedenen Oxidationsstufen Reduktion in mehreren Stufen über Zwischenproduktebeispielsweise Magnetit über Hämatit zu Wüstit. Aus morphologischen, thermodynamischen und kinetischen Gründen unterscheiden sich Optimalwerte für Partikelverweilzeit und Gasverweilzeit für die verschiedenen Stufen beziehungsweise Zwischenprodukte. Verschiedene Zwischenprodukte liegen bei erfindungsgemäßer Verfahrensführung im Kreuzstrom in verschiedenen Zonen des Fließbettes verschieden konzentriert vor. Mit Zonen des Fließbettes sind dabei Bereiche entlang der Erstreckung vom Eingabeort zum Entnahmeort gemeint. Daher ist es vorteilhaft, wenn Einstellung verschiedener Betthöhen in verschiedenen Zonen des Fließbetts möglich ist. So können für verschiedene Zonen Partikelverweilzeit und Gasverweilzeit durch Einstellung der Betthöhe passend adaptiert werden. Das ist beispielsweise durch Wehre möglich, oder durch verschieden dimensionierte Zonen des Reaktorraums, von dem das Fließbett begrenzt wird.

Vorzugsweise beträgt die Betthöhe im Fließbett 0,1-0,5 m, besonders bevorzugt 0,3-0,4 m. Damit können bei erfindungsgemäßer Verfahrensführung bei der Reduktion von oxidischen Eisenträgerpartikeln ausreichende Gasverweilzeiten und Partikelverweilzeiten erreicht werden. Der Anteil von unverbrauchtem Reduktionsmittel in dem verbrauchten Reduktionsgas liegt in einem ökonomisch vertretbaren Rahmen, wenn das Fließbett eine Betthöhe zwischen 0,1-0,5 Meter aufweist, wobei 0,1 und 0,5 von dem Bereich mit umfasst sind.

Vorzugsweise beträgt die Gasverweilzeit des Reduktionsgases in dem Fließbett 0,1 Sekunde bis 10 Sekunden, besonders bevorzugt 1 s - 2 s. Wenn das Reduktionsgas in dem Fließbett zwischen 1 und 2 Sekunden - wobei 1 und 2 von dem jeweiligen Bereich mit umfasst sind,verweilt, kann Sauerstoffabbau bereits nahe am Gleichgewicht erfolgen, und der Anteil von unverbrauchtem Reduktionsmittel in dem verbrauchten Reduktionsgas liegt dann in einem ökonomisch besonders gut vertretbaren Rahmen.

Ziel ist es nämlich, beim Passieren des Fließbetts möglichst viel Reduktionsmittel zu verbrauchen. Je weniger Reduktionsmittel verbraucht wird, desto mehr Reduktionsgas muss für eine gegebene Menge oxidischen Eisenträgerpartikeln in das Fließbett eingeführt werden beziehungsweise umso größer ist der Aufwand zur Rezirkulierung von unverbrauchtem Reduktionsmittel.

Bei erfindungsgemäßer Verfahrensführung der Betthöhe und/oder Gasverweilzeit zeigt sich auch überraschenderweise, dass eine Steigerung des Stoffumsatzes infolge erhöhten Drucks des Reduktionsgases kaum signifikant erfolgt und zu einem Anstieg des Anteils von unverbrauchtem Reduktionsmittel in dem verbrauchten Reduktionsgas führen kann.

Mit Atmosphärendruck beziehungsweise geringem Überdruck kann entsprechend resourcenschonend und sicherheitstechnisch vorteilhaft gearbeitet werden, ohne auf nennenswerte Steigerungen des Stoffumsatzes zu verzichten.

Vorzugsweise wird aus dem Fließbett austretendes, verbrauchtes Reduktionsgas nach Aufbereitung wieder als Komponente des Reduktionsgases in das Fließbett rezirkuliert. Das macht das Verfahren wirtschaftlicher. Die Reduktionsgaskomponente Wasserstoff macht Rezirkulierung bei der Reduktion von oxidischen Eisenträgerpartikeln sehr einfach, da diesbezüglich neben einer gegebenenfalls notwendigen Staubabtrennung lediglich eine Abtrennung des Reaktionsproduktes Wasser $H_2O$ stattfinden muss.

Nach einer vorteilhaften Ausführungsvariante wird dem Fließbett überall das gleiche Reduktionsgas zugeführt; gleich bezüglich Zusammensetzung, oder bezüglich Temperatur, oder bezüglich Druck, oder bezüglich zweier oder aller drei dieser Parameter. Das macht die Kontrolle des Verfahrens einfach und reduziert anlagentechnischen Aufwand.

Nach einer anderen vorteilhaften Ausführungsvariante wird in verschiedene Zonen des Fließbetts verschiedenes Reduktionsgas - beispielsweise Mischungen mehrerer Komponenten in verschiedenen Verhältnissen, also Reduktionsgas jeweils verschiedener Zusammensetzung; es kann sich auch um Reduktionsgas mit jeweils verschiedener Temperatur handeln, oder um Reduktionsgas mit jeweils verschiedenem Druck; oder um Reduktionsgase, die bezüglich zweier oder aller drei dieser Parameter verschieden sindzugeführt. Das ist dann möglich, - , wenn das Fließbett verschiedene Zonen aufweist. Auf diese Weise kann man mit verschieden reaktionsfähigen Reduktionsgasen darauf reagieren, dass in verschiedenen Zonen verschieden reaktionsfähige Zwischenprodukte vorhanden sind.

Eine Vorrichtung zur Durchführung des erfindungsgemäßen Verfahrens umfasst einen Fließbettreaktor geeignet zur Führung von Partikeln und Reduktionsgas im Kreuzstrom in einem Reaktorraum mit Verteilerboden zur Ausbildung des Fließbetts. Der Reaktorraum hat zumindest eine Eingabeöffnung für oxidische Eisenträgerpartikel und zumindest eine Entnahmeöffnung für Reaktionsprodukt aus dem Reaktorraum. Die Vorrichtung umfasst auch zumindest eine Reduktionsgaszufuhrleitung zur Zufuhr von Reduktionsgas zum Verteilerboden, und zumindest eine Reduktionsgasabfuhrleitung zur Abfuhr von verbrauchtem Reduktionsgas aus dem Reaktorraum.

"Einem" ist als unbestimmter Artikel zu verstehen im Ausdruck "in einem Reaktorraum".

Der Reaktorraum kann in mehrere Zonen unterteilt sein entlang seiner Erstreckung von der Eingabeöffnung zur Entnahmeöffnung. Das kann beispielsweise durch, vorzugsweise verstellbare, Wehre erfolgen, die eine Quervermischung der Partikel aus - von der Eingabeöffnung zur Entnahmeöffnung gesehen - benachbarten Zonen unterbinden sowie gezielte Einstellung von Zonen mit verschiedenen Betthöhen erlauben. Das kann auch dadurch realisiert sein, dass der Fließbettreaktor mehrere Teilreaktoren umfasst, deren jeweilige Teil-Reaktorräume jeweils einzelne Zonen bilden. In Summe ergeben die Teilreaktoren den Fließbettreaktor, und die Teil-Reaktorräume den Reaktorraum des Fließbettreaktors. Die Teil-Reaktorräume können auch in mehrere Zonen unterteilt sein. Nach einer Ausführungsvariante können die einzelnen Zonen verschiedene Dimensionen in der Horizontale und/oder in der Vertikalen aufweisen - so dass das Fließbett jeweils verschieden breit ist beziehungsweise verschiedene maximale Betthöhen möglich sind; auf diese Weise sind bei konstantem Durchsatz verschiedene Betthöhen in verschiedenen Zonen realisierbar.

Nach einer Variante umfasst der Fließbettreaktor - beziehungsweise gegebenenfalls die Teilreaktoren - mehreren gleichartige Module. Das erlaubt kostengünstige Errichtung mit vorgefertigten Modulen, sowie einfache Anpassung an unterschiedliche Kapazitätsanforderungen.

Vorzugsweise [potentieller umfasst der Fließbettreaktor mehrere Teilreaktoren. Diese können sequenziell und/oder parallel angeordnet sein. Sie sind bevorzugt über Übergabevorrichtungen miteinander verbunden. Im Betrieb werden Partikel beispielsweise von einem Teilreaktor in den in Richtung von der Eingabeöffnung zur Entnahmeöffnung entlang des Fließbettreaktors gesehen benachbarten Teilreaktor übergeben mittels der Übergabevorrichtungen. Die Übergabevorrichtungen sind geeignet, Partikel zu übergeben, ohne dass es zu Lufteintritt in die Teilreaktoren beziehungsweise Gasaustritt kommt.

Vorzugsweise sind mehrere Teilreaktoren übereinander gestapelt. Das vermindert den Flächenbedarf des Layouts der Vorrichtung zur Durchführung des erfindungsgemäßen Verfahrens. Partikel strömen der Schwerkraft folgend von einer oben gelegenen Eingabeöffnung zu einer unten gelegenen Entnahmeöffnung.

Der Verteilerboden des Fließbettreaktors ist im Wesentlichen horizontal. Davon wird eine Abweichung von der Horizontalen von bis zu 10° mit umfasst; bevorzugt sind bis zu 5° Abweichung mit umfasst, besonders bevorzugt sind bis zu 2° Abweichung mit umfasst. Bei zu hoher Abweichung von der Horizontalen wird die Betthöhe im Fließbett über die Längserstreckung des Fließbetts vom Eingabeort zum Entnahmeort inhomogen, was sich negativ auf die Regelbarkeit der Partikelverweilzeit auswirkt.

Vorzugsweise ist der Verteilerboden des Fließbettreaktors beziehungsweise zumindest eines Teilreaktors von der Eingabeöffnung zur Entnahmeöffnung hin abwärts geneigt. Das vereinfacht den Fluss der Partikel im Kreuzstrom, wie beispielsweise von Luftförderrinnen bekannt.

Nach einer Variante weist jede Zone eine eigene Reduktionsgaszufuhrleitung auf. Nach einer Variante mündet in jeden Teilreaktor eine eigene Reduktionsgaszufuhrleitung. Vorzugsweise entspringen diese Reduktionsgaszufuhrleitungen alle aus einer Zentralleitung. Die Zentralleitung liefert Reduktionsgas in die Reduktionsgaszufuhrleitungen. Das über die Zentralleitung gelieferte Reduktionsgas kann beispielsweise frisches Reduktionsgas- also Reduktionsgas, das die Wirbelschicht noch nie durchströmt hat - sein, oder eine Mischung aus frischem Reduktionsgas und einem rezirkuliertem Reduktionsgas - aus Aufbereitung von verbrauchtem Reduktionsgas gewonnenes Reduktionsgas.

Nach einer Variante weist jede Zone eine eigene Reduktionsgasabfuhrleitung auf. Nach einer Variante entspringt aus jedem Teilreaktor eine eigene Reduktionsgasabfuhrleitung. Vorzugsweise münden alle Reduktionsgasabfuhrleitungen in eine Abfuhrsammelleitung, welche in eine Gasaufbereitungsanlage mündet. In der Gasaufbereitungsanlage wird das verbrauchte Reduktionsgas aufbereitet, beispielsweise entstaubt und getrocknet. Die Vereinigung aller aus dem Reaktorraum beziehungsweise seinen Zonen und/oder Teilreaktoren austretenden verbrauchten Reduktionsgas zwecks zentraler Aufbereitung erleichtert ihre Rezirkulierung in den Reduktionsprozess.

Ein weiterer Gegenstand der vorliegenden Anmeldung ist eine

Signalverarbeitungseinrichtung mit einem maschinenlesbaren Programmcode, dadurch gekennzeichnet, dass er Regelbefehle zur Durchführung eines erfindungsgemäßen Verfahrens aufweist.

Ein weiterer Gegenstand der vorliegenden Anmeldung ist ein maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Ein weiterer Gegenstand der vorliegenden Anmeldung ist ein Speichermedium mit einem darauf gespeicherten erfindungsgemäßen maschinenlesbaren Programmcode.

Kurze Beschreibung der Zeichnungen

Nachfolgend wird die vorliegende Erfindung anhand mehrerer schematischer Figuren beispielhaft beschrieben.

Figur 1 zeigt die Durchführung eines erfindungsgemäßen Verfahrens im Schnitt durch einen schematischen Reaktorraum.
Figur 2 zeigt schematisch eine Anordnung mit mehreren Teilreaktoren.
Figur 3 zeigt den theoretischen Zusammenhang der herrschenden Lehre beziehungsweise den von den Erfindern aufgefundenen Zusammenhang zwischen Leerrohrgeschwindigkeit U und Partikelgröße d.

Beschreibung der Ausführungsformen

Beispiele

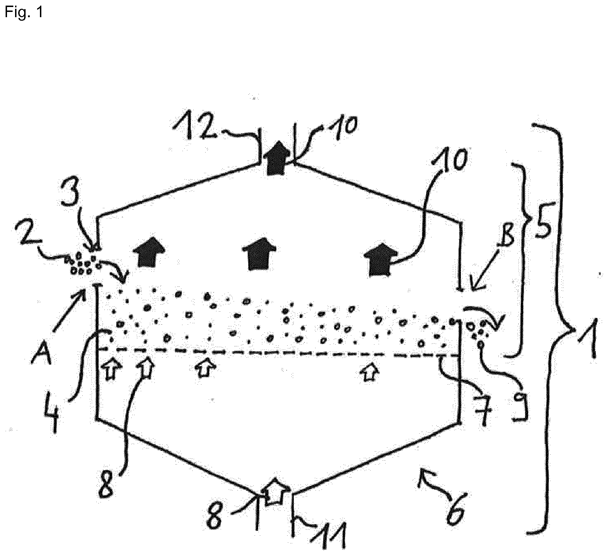

Figur 1 zeigt schematisch die Durchführung einer Ausführungsform des erfindungsgemäßen Verfahrens. Das Verfahren wird in der Vorrichtung 1 durchgeführt. Oxidische Eisenträgerpartikel 2, die zu zumindest 90 Massen% eine Korngröße kleiner/gleich 200 $\mu$m haben, werden am Eingabeort A durch die Eingabeöffnung 3 kontinuierlich in ein Fließbett 4 im Reaktorraum 5 eines Fließbettreaktors 6 eingegeben, was durch einen Pfeil dargestellt ist. Nach einer Variante können bis zu 30 Massen% der oxidischen Eisenträgerpartikel kleiner 15 $\mu$m sein. Das Fließbett 4 wird im Reaktorraum 5 dadurch ausgebildet, dass Partikel entgegen der Schwerkraft von einem, von unten durch einen Verteilerboden 7 einströmenden Reduktionsgas 8 - dargestellt durch nicht ausgefüllte Blockpfeile - angehoben werden. Im dargestellten Beispiel wird überall das gleiche Reduktionsgas 8 zugeführt. Der Verteilerboden 7 ist durch Lücken im unteren Umriss des Reaktorraums 5 angedeutet; zu besseren Übersichtlichkeit wurde nicht jeder Lücke ein eigener Blockpfeil zugeordnet, und es wurden nicht alle Blockpfeile mit dem Bezugzeichen 8 versehen. Eisenoxide in den oxidischen Eisenträgerpartikeln 2 werden durch das Reduktionsgas 8 zum Reduktionsprodukt 9 reduziert. Durch die Reduktion der Eisenoxide in den oxidischen Eisenträgerpartikeln verbrauchtes Reduktionsgas 10 tritt - dargestellt durch ausgefüllte Blockpfeile - oben aus dem Fließbett 4 aus. Das Reduktionsgas 8 besteht beispielsweise aus technisch reinem Wasserstoff $H_2$; entsprechend wird das verbrauchte Reduktionsgas 10 beispielsweise Wasser $H_2O$ und Wasserstoff enthalten, da nicht der gesamte von unten einströmende Wasserstoff umgesetzt werden wird. Vom verbrauchten Reduktionsgas 10 aus dem Fließbett heraus nach oben mitgerissene Partikel sind nicht extra dargestellt. An einem Entnahmeort B werden kontinuierlich die Partikel des Reduktionsproduktes 9 aus dem Fließbett 4 im Reaktorraum 5 entnommen, was mit einem Pfeil dargestellt ist. Das Reduktionsgas 8 wird mit einer Geschwindigkeit von über 0,05 m/s von unten nach oben im Kreuzstrom durch das Fließbett 4 geführt. Die Temperatur der eingegebenen oxidischen Eisenträgerpartikel 2 beträgt beispielsweise 1173 K, und die Temperatur des einströmenden Reduktionsgases 8 überall 1023 K. Das Reduktionsprodukt 9 hat beispielsweise eine Temperatur von 853 K.

In dem in Figur 1 schematisch dargestellten Fließbettreaktor 6 herrscht vorzugsweise ein geringer Überdruck von 200000 Pa gegenüber der Umgebung.

Das dargestellte Verfahren kann beispielsweise so durchgeführt werden, dass die Betthöhe in der Wirbelschicht 4 0,1-0,5 m beträgt, und/oder die Gasverweilzeit 0,1 - 10 s, bevorzugt 1 - 2 s, beträgt.

Das Reduktionsgas 8 wird über die Reduktionsgaszufuhrleitung 11 dem Verteilerboden 7 zugeführt. Die Reduktionsgasabfuhrleitung 12 dient zur Abfuhr von verbrauchtem Reduktionsgas 10 aus dem Reaktorraum 5.

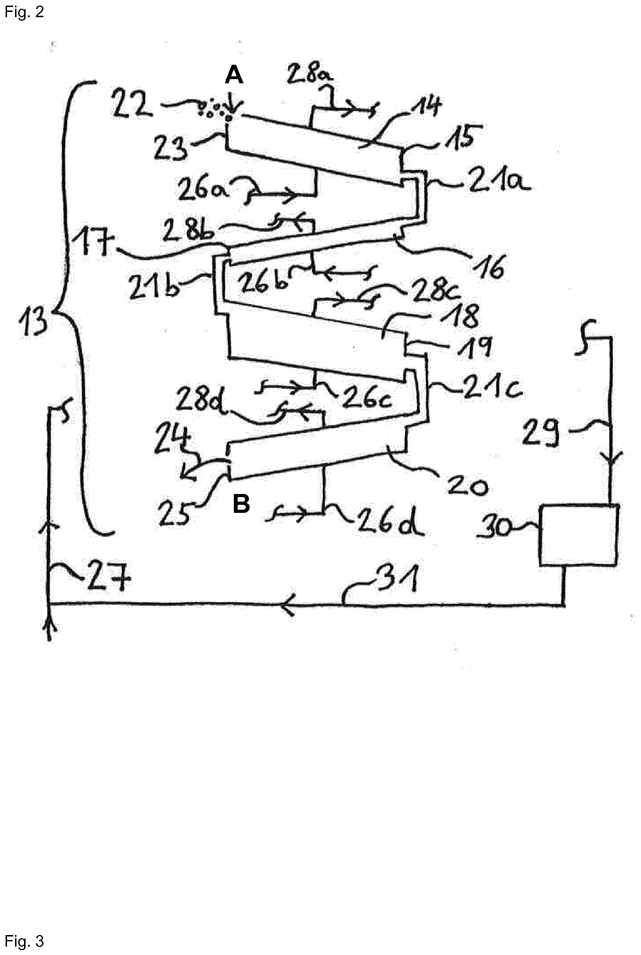

Figur 2 zeigt schematisch eine Ausführungsform, in der ein Fließbettreaktor 13 mehrere Teilreaktoren 14,16,18,20 umfasst. Die Teilreaktoren sind sequentiell miteinander verbunden; Teilreaktor 14 ist an seinem Ende 15 mit dem Teilreaktor 16 verbunden, der selber an seinem Ende 17 mit dem Teilreaktor 18 verbunden ist. Teilreaktor 18 ist mit seinem Ende 19 mit dem Teilreaktor 20 verbunden. Die Verbindungen erfolgen über Übergabevorrichtungen 21a,21b,21c. Die Eingabeöffnung A für oxidische Eisenträgerpartikel 22 ist am Anfang 23 des Teilreaktors 14 vorhanden, die Entnahmeöffnung B für Reaktionsprodukt 24 ist am Ende 25 des Teilreaktors 20 vorhanden. Die Zwischenprodukte der Reduktion der oxidische Eisenträgerpartikel 22 zum Reduktionsprodukt 24 werden durch die Übergabevorrichtungen 21a,21b,21c jeweils von einem, in Richtung von der Eingabeöffnung A entlang der Wirbelschicht zur Entnahmeöffnung B hin gesehen vorderen, Teilreaktor in den darauffolgenden Teilreaktor übergeben. Während das feste Material in der - nicht extra dargestellten - Wirbelschicht - also oxidische Eisenträgerpartikel, Partikel von Zwischenprodukten, und Partikel von Reduktionsprodukt - durch die aufeinander folgenden, also sequentiell miteinander verbundenen, Teilreaktoren 14,16,18,20 von der Eingabeöffnung A zur Entnahmeöffnung B des Fließbettreaktors 13 strömt, wird es im Kreuzstrom vom Reduktionsgas - nicht extra dargestellt - durchströmt.

In der Darstellung der Figur 2 sind die Teilreaktoren 14,16,18,20 vertikal übereinander gestapelt. Sie sind mit leicht abschüssigen Böden ausgeführt. In die verschiedene Teilreaktoren 14,16,18,20 münden jeweils eigene Reduktionsgaszufuhrleitungen 26a,26b,26c,26d, die alle aus einer Zentralleitung 27 entspringen - zur besseren Übersichtlichkeit sind ihre Verbindungen mit Zentralleitungen 27 nicht extra dargestellt. Von den verschiedenen Teilreaktoren 14,16,18,20 gehen jeweils eigene Reduktionsgasabfuhrleitungen 28a,28b,28c,28d aus, die alle in eine Abfuhrsammelleitung 29 münden- zur besseren Übersichtlichkeit sind ihre Verbindungen mit Abfuhrsammelleitung 29 nicht extra dargestellt. Die Abfuhrsammelleitung 29 mündet in eine Gasaufbereitungsanlage 30, in der verbrauchtes Reduktionsgas beispielsweise entstaubt und getrocknet wird. Über eine Rezirkulierungsleitung 31 wird das Produkt der Aufbereitung - im Fall des Beispiels aus Figur 1 entstaubter und getrockneter Wasserstoff - der Zentralleitung 27 zugeführt, und somit zusammen mit anderweitig besorgtem frischem Wasserstoff $H_2$ als Komponente des Reduktionsgases in das Verfahren rezirkuliert.

Das Fließbett im Fließbettreaktor 13 weist mehrere Zonen auf - in jedem Teilreaktor 14,16,18,20 befindet sich eine Zone. Durch verschiedene Dimensionierung der Teilreaktoren 14,16,18,20, schematisch dargestellt in Figur 2 durch verschieden Höhen, haben die verschiedenen Zonen des Fließbetts bei kontinuierlicher Verfahrensführung jeweils verschiedene Betthöhen.

Nach einer Variante des erfindungsgemäßen Verfahrens könnten die verschiedenen Zonen mit verschiedenem Reduktionsgas versorgt werden; diese Variante ist nicht extra dargestellt.

Auf eine detaillierte Darstellung der Zufuhr beziehungsweise Herstellung von frischem Wasserstoff $H_2$ aus anderen Quellen wurde zur besseren Übersichtlichkeit verzichtet.

Insgesamt beeinflussen Temperatur, Druck und Zusammensetzung des Reduktionsgases die Reaktionskinetik, woraus sich Anforderungen an Gasverweilzeit und Partikelverweilzeit sowie Betthöhe ergeben. Die Geschwindigkeit des Reduktionsgases beeinflusst das Ausmaß von Austrag aus dem Fließbett und die Menge des zirkulierenden Reduktionsgasvolumens. Reaktionskinetik und Reduktionsgasgeschwindigkeit wiederum wirken sich auf die benötigte spezifische Reaktionsfläche aus.

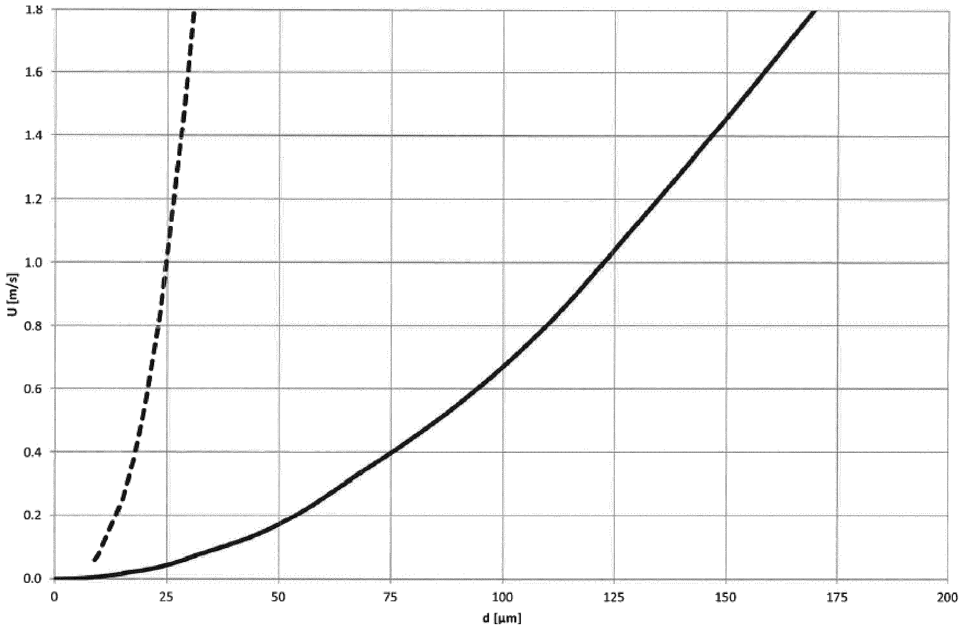

Figur 3 zeigt mit durchgezogener Linie den nach herrschender Lehre erwarteten Wert für die theoretische Schwebegeschwindigkeit $U_t$ für verschiedene Korngrößen d kugelförmiger DRI/Eisenerz-Partikel bei 1023 K mit Wasserstoff $H_2$ als Reduktionsgas und einem Überdruck von 200000 Pa:

$$U_t = \sqrt{\left(\frac{4}{3} * \frac{(\rho p - \rho g)}{\rho g} * \frac{d*g}{Cw}\right)}$$

mit $\quad C_w = \frac{24}{Re} + \frac{4}{\sqrt{Re}} + 0{,}4 \quad$ und mit $\quad Re = \frac{\rho g * U_t * d}{\mu}$

Ebenso gezeigt ist strichliert der tatsächlich gefundene, von der herrschenden Lehre abweichend

$U_{max} = (40000*d)^\wedge 2{,}78$ folgende, Zusammenhang zwischen Korngröße d und Schwebegeschwindigkeit $U_{max}$.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination in einem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die beschriebenen Eigenschaften, Merkmale und Vorteile der Erfindung sowie die Art und Weise, wie diese erreicht werden, werden klarer und deutlicher verständlich im Zusammenhang mit der Beschreibung des bzw. der Ausführungsbeispiele der Erfindung, die im Zusammenhang mit den Zeichnungen näher erläutert werden. Das bzw. die Ausführungsbeispiele dient bzw. dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Obwohl die Erfindung im Detail durch das bzw. die bevorzugten Ausführungsbeispiele näher illustriert und beschrieben wurde, so ist die Erfindung nicht durch das bzw. die offenbarten Beispiele eingeschränkt und andere Variationen können hieraus abgeleitet werden, ohne den Schutzumfang der Erfindung zu verlassen.

Liste der Bezugzeichen

| 1 | Vorrichtung zur Durchführung eines erfindungsgemäßen Verfahrens |
|---|---|
| 2 | oxidische Eisenträgerpartikel |
| 3 | Eingabeöffnung |
| 4 | Fließbett |
| 5 | Reaktorraum |
| 6 | Fließbettreaktor |
| 7 | Verteilerboden |
| 8 | Reduktionsgas |
| 9 | Reduktionsprodukt |

| 10 | verbrauchtes Reduktionsgas |
| 11 | Reduktionsgaszufuhrleitung |
| 12 | Reduktionsgasabfuhrleitung |
| 13 | Fließbettreaktor |
| 14 | Teilreaktor |
| 15 | Ende |
| 16 | Teilreaktor |
| 17 | Ende |
| 18 | Teilreaktor |
| 19 | Ende |
| 20 | Teilreaktor |
| 21a,21b,21c | Übergabevorrichtungen |
| 22 | Eisenträger-Partikel |
| 23 | Anfang |
| 24 | Reaktionsprodukt |
| 25 | Ende |
| 26a,26b,26c,26d | Reduktionsgaszufuhrleitungen |
| 27 | Zentralleitung |
| 28a,28b,28c,28d | Reduktionsgasabfuhrleitungen |
| 29 | Abfuhrsammelleitung |
| 30 | Gasaufbereitungsanlage |
| 31 | Rezirkulierungsleitung |

## Patentansprüche

1. Verfahren zur Direktreduktion von oxidischen Eisenträgerpartikeln (2) zu einem Reduktionsprodukt (9) in einem im Kreuzstrom von einem 30 - 100 Mol% Wasserstoff $H_2$ enthaltenden Reduktionsgas (8) durchströmten Fließbett (4),

   **dadurch gekennzeichnet, dass**
   die in das Fließbett (4) eingegebenen oxidischen Eisenträgerpartikel (2) zu zumindest 90 Massen% eine Korngröße kleiner/gleich 200 Mikrometer haben,
   und dass die Leerrohrgeschwindigkeit U des durch das Fließbett (4) strömenden Reduktionsgases (9) zwischen 0,05 m/s und 1 m/s so eingestellt wird, dass sie für die Korngröße d gleich $d_{30}$ der in das Fließbett (4) eingegebenen oxidischen Eisenträgerpartikel (2) oberhalb der theoretischen Schwebegeschwindigkeit $U_t$ liegt und kleiner/gleich $U_{max}$ ist, wobei sich der theoretisch vorhergesagte Wert $U_t$ für eine Korngröße d ergibt aus:

$$U_t = \sqrt{\left(\frac{4}{3} * \frac{(\rho p - \rho g)}{\rho g} * \frac{d*g}{Cw}\right)}$$

$$\text{mit } C_w = \frac{24}{Re} + \frac{4}{\sqrt{Re}} + 0{,}4 \quad \text{und mit } Re = \frac{\rho g * U_t * d}{\mu}$$

   und sich $U_{max}$ ergibt aus dem tatsächlich gefundenen Zusammenhang zwischen Partikelgröße und Schwebegeschwindigkeit für eine Partikelgröße d gleich $d_{30}$:

$$U_{max} = (40000*d)^{2{,}78} \quad .$$

2. Verfahren nach Anspruch 1, **dadurch gekennzeichnet, dass** es bei einer Temperatur zwischen 773 K und 1123 K durchgeführt wird.

3. Verfahren nach einem der Ansprüche 1 und 2, **dadurch gekennzeichnet, dass** es unter einem geringen Überdruck gegenüber der Umgebung durchgeführt wird.

4. Verfahren nach einem der Ansprüche 1 bis 3, **dadurch gekennzeichnet, dass** $d_{30}$ kleiner/gleich 110 Mikrometer ist für die in das Fließbett eingegebenen oxidischen Eisenträgerpartikel (2).

5. Verfahren nach einem der Ansprüche 1 bis 3, **dadurch gekennzeichnet, dass** die in das Fließbett eingegebenen oxidischen Eisenträgerpartikel (2) zu zumindest 50 Massen% zwischen 15 Mikrometer und 100 Mikrometer liegen.

6. Verfahren nach einem der Ansprüche 1 bis 5, **dadurch gekennzeichnet, dass** die oxidischen Eisenträgerpartikel (2) mit Anteilen von maximal 30 Massen% kleiner als 10 Mikrometer $\mu$m vorliegen.

7. Verfahren nach einem der Ansprüche 1 bis 6, **dadurch gekennzeichnet, dass** das Fließbett (4) verschiedene Zonen mit verschiedenen Betthöhen aufweist.

8. Verfahren nach einem der Ansprüche 1 bis 7, **dadurch gekennzeichnet, dass** die Betthöhe im Fließbett 0,1-0,5 m, besonders bevorzugt 0,3-0,4 m beträgt.

9. Verfahren nach einem der Ansprüche 1 bis 7, **dadurch gekennzeichnet, dass** die Gasverweilzeit des Reduktionsgases (8) in dem Fließbett (4) 0,1 Sekunde bis 10 Sekunden, besonders bevorzugt 1 s - 2 s, beträgt.

10. Verfahren nach einem der Ansprüche 1 bis 9, **dadurch gekennzeichnet, dass** aus dem Fließbett (4) austretendes, verbrauchtes Reduktionsgas (10) nach Aufbereitung wieder als Komponente des Reduktionsgases (8) in das Fließbett (4) rezirkuliert wird.

11. Verfahren nach einem der Ansprüche 1 bis 10, **dadurch gekennzeichnet, dass** dem Fließbett (4) überall das gleiche Reduktionsgas (8) zugeführt wird.

12. Verfahren nach einem der Ansprüche 1 bis 10, **dadurch gekennzeichnet, dass** in verschiedene Zonen des Fließbetts (4) verschiedenes Reduktionsgas (8) zugeführt wird.

13. Signalverarbeitungseinrichtung mit einem maschinenlesbaren Programmcode, **dadurch gekennzeichnet, dass** er Regelbefehle zur Durchführung eines Verfahrens nach einem der Ansprüche 1 bis 12 aufweist.

14. Maschinenlesbarer Programmcode für eine Signalverarbeitungseinrichtung, **dadurch gekennzeichnet, dass** der Programmcode Regelbefehle aufweist, welche die Signalverarbeitungseinrichtung zur Durchführung eines Verfahrens nach einem der Ansprüche 1 bis 12 veranlassen.

15. Speichermedium mit einem darauf gespeicherten maschinenlesbaren Programmcode nach Anspruch 14.

**Claims**

1. A process of direct reduction of oxidic iron-bearing particles (2) to a reduction product (9) in a fluidized bed (4) through which a reduction gas (8) containing 30-100 mol% of hydrogen $H_2$ flows in crosscurrent,

   **characterized in that**
   the oxidic iron-bearing particles (2) introduced into the fluidized bed (4) have a grain size of not more than 200 micrometers to an extent of at least 90% by mass,
   and **in that** the superficial velocity U of the reduction gas (9) flowing through the fluidized bed (4) is set between 0.05 m/s and 1 m/s such that it is above the theoretical fluidization velocity $U_t$ and not more than $U_{max}$ for the grain size d = $d_{30}$ of the oxidic iron-bearing particles (2) introduced into the fluidized bed (4),
   wherein the theoretically predicted value $U_t$ for a grain size d is found from:

$$U_t = \sqrt{\left(\frac{4}{3} * \frac{(\rho p - \rho g)}{\rho g} * \frac{d*g}{Cw}\right)}$$

   with $C_w = \frac{24}{Re} + \frac{4}{\sqrt{Re}} + 0.4$ and with $Re = \frac{\rho g * U_t * d}{\mu}$

   and $U_{max}$ is calculated from the actual correlation found between particle size and fluidization velocity for a particle size d = $d_{30}$:

$$U_{max} = (40000*d)\char`\^2.78.$$

2. The process as claimed in claim 1, **characterized in that** it is conducted at a temperature between 773 K and 1123 K.

3. The process as claimed in either of claims 1 and 2, **characterized in that** it is conducted under a slightly elevated pressure compared to the environment.

4. The process as claimed in any of claims 1 to 3, **characterized in that** $d_{30}$ is not more than 110 micrometers for the oxidic iron-bearing particles (2) introduced into the fluidized bed.

5. The process as claimed in any of claims 1 to 3, **characterized in that** the oxidic iron-bearing particles (2) introduced into the fluidized bed (2) are between 15 micrometers and 100 micrometers to an extent of at least 50% by mass.

6. The process as claimed in any of claims 1 to 5, **characterized in that** the oxidic iron-bearing particles (2) are present at smaller than 10 micrometers $\mu$m with fractions of not more than 30% by mass.

7. The process as claimed in any of claims 1 to 6, **characterized in that** the fluidized bed (4) has different zones with different bed heights.

8. The process as claimed in any of claims 1 to 7, **characterized in that** the bed height in the fluidized bed is 0.1-0.5 m, more preferably 0.3-0.4 m.

9. The process as claimed in any of claims 1 to 7, **characterized in that** the gas dwell time of the reduction gas (8) in the fluidized bed (4) is 0.1 second to 10 seconds, more preferably 1 s - 2 s.

10. The process as claimed in any of claims 1 to 9, **characterized in that** spent reduction gas (10) exiting from the fluidized bed (4), after processing, is recirculated again into the fluidized bed (4) as a component of the reduction gas (8).

11. The process as claimed in any of claims 1 to 10, **characterized in that** the fluidized bed (4) is supplied with the same reduction gas (8) throughout.

12. The process as claimed in any of claims 1 to 10, **characterized in that** different zones of the fluidized bed (4) are supplied with different reduction gas (8).

13. A signal processing device with a machine-readable program code, **characterized in that** it has control commands for performance of a process as claimed in any of claims 1 to 12.

14. A machine-readable program code for a signal processing device, **characterized in that** the program code has control commands that cause the signal processing device to perform a process as claimed in any of claims 1 to 12.

15. A storage medium having a machine-readable program code as claimed in claim 14 stored thereon.

**Revendications**

1. Procédé pour la réduction directe de particules porteuses de fer sous forme d'oxydes (2) en un produit de réduction (9) dans un lit fluidisé (4) traversé en flux croisé par un gaz de réduction (8) contenant 30-100% en mole d'hydrogène $H_2$, **caractérisé en ce qu'**au moins 90% en masse des particules porteuses de fer sous forme d'oxydes (2) introduites dans le lit fluidisé (4) présentent une grosseur inférieure/égale à 200 $\mu$m et **en ce que** la vitesse en conduit vide U du gaz de réduction (9) s'écoulant à travers le lit fluidisé (4) est réglée entre le 0,05 m/s et 1 m/s de manière telle qu'elle est située au-dessus de la vitesse théorique de mise en suspension $U_t$ pour la grosseur d valant $d_{30}$ des porteuses de fer sous forme d'oxydes (2) introduites dans le lit fluidisé (4) et elle est inférieure/égale à $U_{max}$, la valeur $U_t$ théoriquement prédite pour une grosseur d étant obtenue par :

$$U_t = \sqrt{\left(\frac{4}{3} * \frac{(\rho p - \rho g)}{\rho g} * \frac{d*g}{Cw}\right)}$$

avec $C_w = \frac{24}{Re} + \frac{4}{\sqrt{Re}} + 0{,}4$ et avec $Re = \frac{\rho g * U_t * d}{\mu}$

et $U_{max}$ étant obtenu par la relation effectivement trouvée entre grosseur de particule et vitesse de mise en suspension pour une grosseur de particule d valant $d_{30}$ :

```
Umax = (40000 * d)^2,78.
```

2. Procédé selon la revendication 1, **caractérisé en ce qu'**il est mis en œuvre à une température entre 773 K et 1123 K.

3. Procédé selon l'une quelconque des revendications 1 et 2, **caractérisé en ce qu'**il est mis en œuvre à une faible surpression par rapport à l'environnement.

4. Procédé selon l'une quelconque des revendications 1 à 3, **caractérisé en ce que** $d_{30}$ est inférieur/égal à 110 micromètres pour les particules porteuses de fer sous forme d'oxydes (2) introduites dans le lit fluidisé.

5. Procédé selon l'une quelconque des revendications 1 à 3, **caractérisé en ce qu'**au moins 50% en masse des particules porteuses de fer sous forme d'oxydes (2) introduites dans le lit fluidisé se situent entre 15 micromètres et 100 micromètres.

6. Procédé selon l'une quelconque des revendications 1 à 5, **caractérisé en ce que** les particules porteuses de fer sous forme d'oxydes (2) inférieures à 10 micromètres sont présentes en des proportions d'au maximum 30% en masse.

7. Procédé selon l'une quelconque des revendications 1 à 6, **caractérisé en ce que** le lit fluidisé (4) présente différentes zones pourvues de différentes hauteurs de lit.

8. Procédé selon l'une quelconque des revendications 1 à 7, **caractérisé en ce que** la hauteur de lit dans le lit fluidisé est de 0,1-0,5 m, de manière particulièrement préférée de 0,3-0,4 m.

9. Procédé selon l'une quelconque des revendications 1 à 7, **caractérisé en ce que** la durée de séjour du gaz de réduction (8) dans le lit fluidisé (4) est de 0,1 seconde à 10 secondes, de manière particulièrement préférée de 1 s-2 s.

10. Procédé selon l'une quelconque des revendications 1 à 9, **caractérisé en ce que** le gaz de réduction (10) épuisé, sortant du lit fluidisé (4) est de nouveau remis en circulation, après traitement, dans le lit fluidisé (4) en tant que composant du gaz de réduction (8).

11. Procédé selon l'une quelconque des revendications 1 à 10, **caractérisé en ce que** le même gaz de réduction (8) est introduit partout dans le lit fluidisé (4).

12. Procédé selon l'une quelconque des revendications 1 à 10, **caractérisé en ce qu'**un gaz de réduction (8) différent est introduit dans les différentes zones du lit fluidisé (4).

13. Dispositif de traitement de signaux pourvu d'un code de programme lisible par machine, **caractérisé en ce qu'**il présente les commandes de régulation pour la mise en œuvre d'un procédé selon l'une quelconque des revendications 1 à 12.

14. Code de programme lisible par machine pour un dispositif de traitement de signaux, **caractérisé en ce que** le code de programme présente des commandes de régulation qui induisent le dispositif de traitement de signaux à mettre en œuvre un procédé selon l'une quelconque des revendications 1 à 12.

15. Support d'enregistrement présentant un code de programme lisible par machine selon la revendication 14 enregistré

sur celui-ci.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3776533 A